(19) Europäisches Patentamt
European Patent Office
Office européen des brevets

(11) **EP 1 692 809 B1**

(12) **FASCICULE DE BREVET EUROPEEN**

(45) Date de publication et mention
de la délivrance du brevet:
**01.08.2007 Bulletin 2007/31**

(21) Numéro de dépôt: **04805293.0**

(22) Date de dépôt: **22.10.2004**

(51) Int Cl.:
**H04L 9/08** (2006.01)

(86) Numéro de dépôt international:
**PCT/FR2004/002734**

(87) Numéro de publication internationale:
**WO 2005/048523 (26.05.2005 Gazette 2005/21)**

(54) **PROCEDE DE CONTROLE AUTOMATIQUE DES FRAUDES DANS UN SYSTEME DE TRANSACTIONS ELECTRONIQUES**

VERFAHREN ZUR AUTOMATISCHEN BETRUGSKONTROLLE IN EINEM ELEKTRONISCHEN TRANSAKTIONSSYSTEM

METHOD FOR THE AUTOMATIC CONTROL OF FRAUD IN AN ELECTRONIC TRANSACTION SYSTEM

(84) Etats contractants désignés:
**AT BE BG CH CY CZ DE DK EE ES FI FR GB GR HU IE IT LI LU MC NL PL PT RO SE SI SK TR**

(30) Priorité: **06.11.2003 FR 0313034**

(43) Date de publication de la demande:
**23.08.2006 Bulletin 2006/34**

(73) Titulaire: **FRANCE TELECOM**
**75015 Paris (FR)**

(72) Inventeur: **CLERC, Fabrice**
**F-14550 Blainville sur Orne (FR)**

(74) Mandataire: **Simon, Viviane**
**France Telecom**
**Division R&D/PIV/Brevets**
**38-40 rue du Général Leclerc**
**92794 Issy Moulineaux Cédex 9 (FR)**

(56) Documents cités:
**DE-C- 19 750 779**     **US-A- 5 845 267**
**US-B1- 6 636 613**

• **FIAT A ET AL: "DYNAMIC TRAITOR TRACING" JOURNAL OF CRYPTOLOGY, SPRINGER VERLAG, NEW YORK, NY, US, vol. 14, no. 3, juin 2001 (2001-06), pages 211-223, XP001077668 ISSN: 0933-2790**
• **BONEH D ET AL: "An efficient public key traitor tracing scheme" ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS, LECTURE NOTES IN COMPUTER SCIENCE ; VOL. 1666, BERLIN : SPRINGER, DE, 15 août 1999 (1999-08-15), pages 338-353, XP002273114 ISBN: 3-540-66347-9**

EP 1 692 809 B1

## Description

L'invention concerne le domaine des services en ligne sur Internet ou tout autre réseau d'information.

Ces services mettent généralement en jeu des protocoles destinés à préserver la confidentialité des transactions électroniques réalisées. Notamment, ces services garantissent l'anonymat des utilisateurs par l'utilisation de clés de session. Lorsqu'un utilisateur se connecte à un service, une clé de session lui est attribuée. Cette clé est utilisée pour crypter les informations échangées entre l'utilisateur et le système fournisseur de services.

Certains systèmes de services en ligne disposent de moyens pour révéler la clé de session en cas d'utilisation frauduleuse du service. La révélation de la clé de session conduit à la révélation de l'identité de l'utilisateur malhonnête et par conséquent à la levée de l'anonymat de cet utilisateur.

Les moyens de levée d'anonymat d'utilisateurs mettent nécessairement en oeuvre des moyens de détection aptes à commander la levée de l'anonymat si certaines conditions d'utilisation frauduleuse sont remplies. Ces moyens doivent donc être aptes à déterminer si il y a utilisation frauduleuse ou non.

Le document US-B1-6 636 613 décrit un système de facturation de transactions utilisateur lorsque l'utilisateur initie une session auprès d'un service en ligne proposé par un fournisseur de service. A cette fin, il est généré pour chaque connexion de l'utilisateur à un fournisseur de service, des caractéristiques uniques de la connexion qui sont associées à l'identité de l'utilisateur. Ce document ne décrit toutefois pas une solution qui permette, dans le cas d'une utilisation frauduleuse du service en ligne, d'obtenir l'identité de l'utilisateur frauduleux.

Un but de l'invention est de fournir un système de levée d'anonymat dans le cadre d'un service en ligne qui ne nécessite pas de moyens pour déterminer une utilisation frauduleuse.

L'invention s'applique en cas d'utilisation frauduleuse consistant à obtenir un service un nombre de fois supérieur à ce qui est autorisé au cours d'une même session. C'est le cas par exemple, lorsqu'un utilisateur qui se connecte à un site de téléchargement de fichiers obtient le téléchargement de plusieurs fichiers alors qu'en réalité, il n'a payé que pour le téléchargement d'un seul fichier.

L'invention s'applique en particulier à la duplication illicite de biens électroniques.

L'invention propose un procédé de contrôle automatique des fraudes dans un système de transactions électroniques, caractérisé en ce qu'il comprend les étapes consistant à :

- lorsqu'un utilisateur initie une session dans le système de transaction électronique, générer un élément et enregistrer dans une base de données l'élément en association avec des informations identifiant l'utilisateur,
- à chaque fois qu'au cours de la session l'utilisateur commande la réalisation d'une opération, déterminer une équation à laquelle satisfait l'élément enregistré dans la base de données,
- lorsqu'un nombre suffisant donné d'opérations a été effectué, résoudre le système d'équations constitué des équations ainsi déterminées pour en déduire l'élément,
- en se reportant à la base de données, déduire à partir de l'élément obtenu, les informations correspondantes identifiant l'utilisateur.

Dans le cadre de l'invention, une session est définie comme une période de temps au cours de laquelle un utilisateur est en relation avec un service en ligne donné et est autorisé par le fournisseur du service à réaliser un certain nombre d'opérations données.

Le procédé de l'invention conduit à révéler l'identité d'un utilisateur lorsque celui-ci a réalisé un nombre n donné d'opérations au cours d'une même session alors qu'il n'y était pas autorisé par le fournisseur de services.

Le procédé de l'invention s'applique automatiquement et de la même manière à tous les utilisateurs d'un service donné. Il n'y a donc aucune distinction d'application entre utilisateurs frauduleux et utilisateurs normaux. Le procédé de l'invention ne met donc pas en oeuvre de moyens spécifiques en cas d'utilisation frauduleuse.

Par ailleurs, avec le procédé de l'invention, l'identité de l'utilisateur n'est divulguée que lorsque celui-ci réalise un nombre donné n d'opérations supérieur au nombre d'opérations autorisé, au cours d'une même session. Par conséquent, avant que l'utilisateur ne réalise la n-ième opération, le procédé ne donne aucune indication quant à l'identité de l'utilisateur puisqu'il fournit un certain nombre d'équations et qu'il existe une infinité de solutions satisfaisant ces équations. Il en résulte que le procédé de l'invention permet de préserver totalement l'anonymat des utilisateurs tant que ceux-ci respectent les limites définies par le fournisseur de services.

De préférence, les équations du système d'équations sont indépendantes. Ainsi, l'utilisateur sera systématiquement identifié lorsqu'il aura réalisé un nombre n connu d'opérations, le nombre n correspondant au nombre d'opérations nécessaires pour obtenir un système de n équations conduisant à une solution unique.

Les équations peuvent être des équations linéaires.

L'élément est par exemple constitué d'une série de coefficients numériques.

Ces coefficients numériques peuvent avantageusement définir un objet géométrique tel qu'un point, une droite, un hyperplan, etc. dans un espace à n dimensions.

Ils peuvent également définir un objet mathématique tel qu'une fonction, une suite, etc.

L'invention concerne également un système de contrôle automatique des fraudes dans un système de transactions électroniques, caractérisé en ce qu'il comprend des premiers moyens de calcul pour générer un élément lorsqu'un utilisateur initie une session dans le système de transactions électroniques, une base de données dans laquelle est enregistré l'élément en association avec des informations identifiant l'utilisateur, les premiers moyens de calcul étant aptes à déterminer une équation à laquelle satisfait l'élément enregistré dans la base de données à chaque fois qu'au cours de la session l'utilisateur commande la réalisation d'une opération, et des seconds moyens de calcul aptes à résoudre le système d'équations constitué des équations ainsi déterminées pour en déduire l'élément lorsqu'un nombre suffisant donné d'opérations a été effectué, de sorte qu'en se reportant à la base de données, il soit possible de déduire à partir de l'élément obtenu, les informations correspondantes identifiant l'utilisateur.

D'autres caractéristiques et avantages ressortiront encore de la description qui suit, laquelle est purement illustrative et non limitative et doit être lue en regard des figures annexées parmi lesquelles :

- la figure 1 représente un exemple de système conforme à une mise en oeuvre de l'invention,
- la figure 2 est une représentation graphique de la détermination d'un élément associé à un utilisateur, l'élément étant une droite définie dans un espace à 2 dimensions,
- la figure 3 est une représentation graphique de la détermination d'un élément associé à un utilisateur, l'élément étant un plan défini dans un espace de dimension n=3,
- la figure 4 est une représentation graphique de la détermination d'un élément associé à un utilisateur, l'élément étant un point défini dans un espace à 2 dimensions,
- la figure 5 est une représentation graphique de la détermination d'un élément associé à un utilisateur, l'élément étant un point défini dans un espace de dimension n=3.

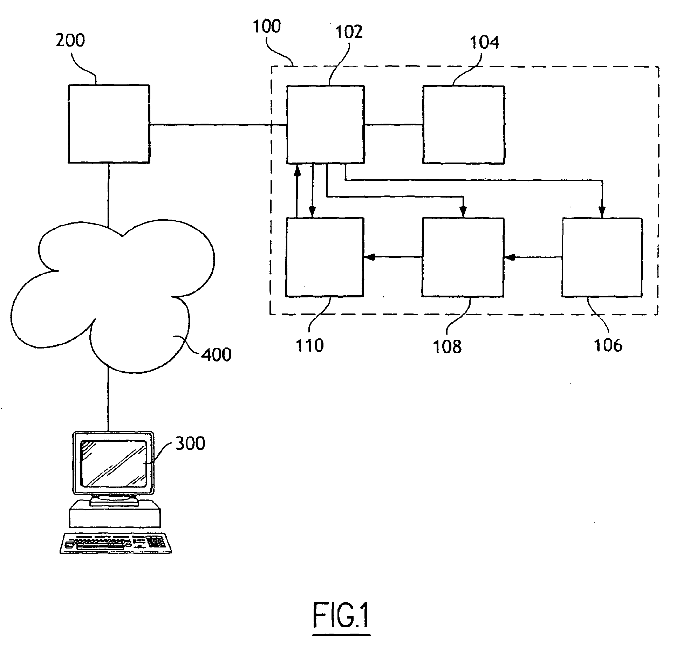

Sur la figure 1, le système de contrôle des fraudes 100 est associé à un serveur 200 de services en ligne (par exemple service de téléchargement de fichiers ou de programmes, service d'achats en ligne, service de consultation de documents, service de communication, etc.) détenu par un fournisseur de services. Le système de contrôle des fraudes comprend un module de pilotage 102 relié au serveur 200, une base de données 104 reliée au module de pilotage 102, un générateur pseudo-aléatoire 106, un premier module de calcul 108 et un deuxième module de calcul 110. Le générateur pseudo-aléatoire 106, le premier module de calcul 108 et un deuxième module de calcul 110 sont commandés par le module de pilotage 102.

Selon une première mise en oeuvre du système de l'invention, lorsqu'un utilisateur 300 se connecte au serveur 200 du fournisseur de services via un réseau de communication 400 et ouvre une session, une clé de session temporaire est automatiquement attribuée à l'utilisateur par le serveur. La clé de session est enregistrée dans la base de données 104. Elle est normalement conservée dans la base de données 104 durant toute la durée de la session, puis supprimée lors de la fermeture de la session. Elle permet un échange sécurisé entre l'utilisateur 300 et le serveur 200. Les clés et autres informations contenues dans la base de données 104 sont confidentielles.

Par ailleurs, lorsque l'utilisateur 300 ouvre une session, le premier module de calcul 108 génère une équation de droite (dimension 1) dans un espace de dimension 2, l'équation étant du type $Y = aX + b$. L'équation de droite est enregistrée dans la base de données 104 en association avec la clé de session attribuées à l'utilisateur. Ainsi, l'utilisateur et la session sont associés de manière univoque à la droite D définie par le couple de coefficients (a, b).

Lorsque l'utilisateur commande la réalisation d'une opération particulière (par exemple téléchargement d'un fichier ou d'un programme) dans le cadre de la session qu'il a ouverte, le premier module de calcul 108 détermine les coordonnées d'un point $P_1$ $(X_1, Y_1)$ appartenant à la droite D. A cet effet, le module de pilotage commande le générateur pseudo-aléatoire 106 pour que celui-ci génère une première coordonnée $X_1$. A partir de cette coordonnée $X_1$, le premier module de calcul 108 détermine une deuxième coordonnée $Y_1$ à partir de l'équation de la droite D, telle que :

$$Y_1 = aX_1 + b$$

Ce premier point $P_1$ $(X_1, Y_1)$ seul ne permet pas de déterminer l'équation de la droite D. A ce stade, il n'est pas possible de remonter à l'identité de l'utilisateur 300.

Si l'utilisateur 300 réussit de manière illicite à commander la réalisation d'une autre opération au cours de la même session, le premier module de calcul 108 détermine les coordonnées d'un deuxième point $P_2$ $(X_2, Y_2)$ appartenant à la droite D. A cet effet, le module de pilotage 102 commande le générateur pseudo-aléatoire 106 pour que celui-ci génère une première coordonnée $X_2$ différente de $X_1$. A partir de cette coordonnée $X_2$, le premier module de calcul 108 détermine une deuxième coordonnée $Y_2$ à partir de l'équation de la droite D, telle que :

$$Y_2 = aX_2 + b$$

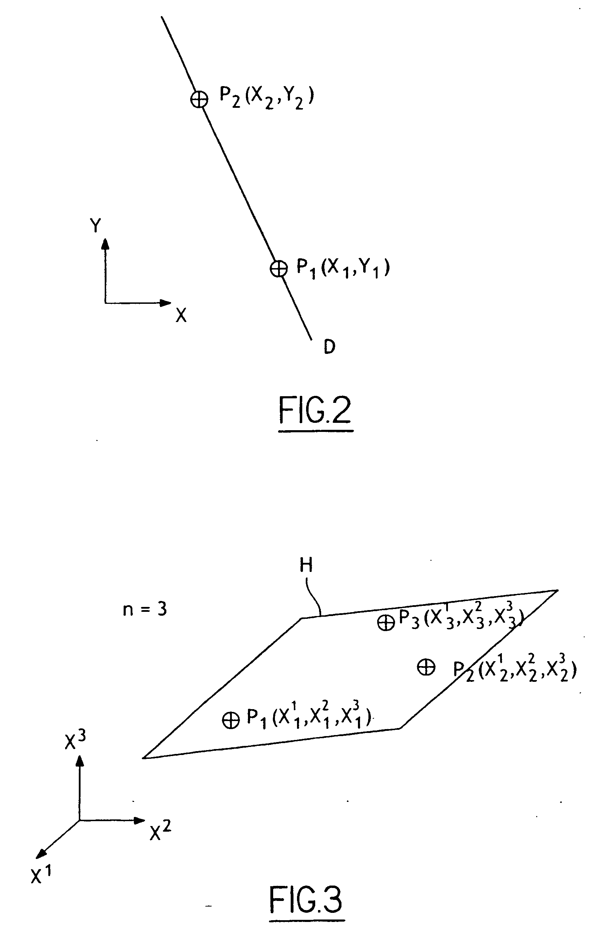

Ainsi qu'illustré sur la figure 2, à partir des deux points $P_1$ ($X_1$, $Y_1$) et $P_2$ ($X_2$, $Y_2$) ainsi déterminés, le deuxième module de calcul 110 en déduit l'équation de la droite D. A cet effet, le deuxième module résout le système d'équations suivant :

$$\begin{cases} Y_1 = aX_1 + b \\ Y_2 = aX_2 + b \end{cases}$$

Connaissant l'équation de la droite D (c'est à dire les coefficients a et b) fournie par le deuxième module de calcul 110, le module de pilotage 102 en déduit, en se reportant à la base de données 104, la clé de session associée. Cette clé permet d'identifier l'utilisateur frauduleux qui a obtenu la réalisation de deux opérations alors même qu'il était autorisé qu'à n'en réaliser qu'une.

Lorsque la confidentialité de l'identité de l'utilisateur 300 a été levée, plusieurs étapes peuvent ensuite être mises en oeuvre. Le fournisseur de services peut par exemple interdire à l'utilisateur 300 l'accès au serveur 200.

Dans la mise en oeuvre de l'invention décrite précédemment, l'espace dans lequel sont créées des droites est un espace de dimension 2. Cette mise en oeuvre peut être généralisée à une application dans un espace de dimension n.

Le premier module de calcul 108 génère une équation d'un hyperplan H (dimension n-1) dans un espace E de dimension n, l'équation étant du type $X_n = a_{n-1}X_{n-1} + ... + a_2X_2 + a_1X_1 + a_0$, dans laquelle au moins (n-2) coefficients parmi $a_{n-1}$, ..., $a_2$, $a_1$, $a_0$ sont nuls. La clé de session ainsi que l'équation d'hyperplan H associé sont enregistrés dans la base de données 104. Ainsi, l'utilisateur et la session sont associés à l'hyperplan H défini par le n-uplet de coefficients ($a_{n-1}$, ..., $a_2$, $a_1$, $a_0$).

A chaque fois que l'utilisateur commande la réalisation d'une i-ème opération au cours de la même session, le premier module de calcul 108 détermine un point $P_i$ de coordonnées $(X_i^1, X_i^2, ... X_i^n)$ appartenant à l'hyperplan H. A cet effet, le module de pilotage 102 commande le générateur pseudo-aléatoire 106 pour que celui-ci génère un (n-1)-uplet de coordonnées $(X_i^1, X_i^2, ... X_i^{n-1})$. A partir de ce (n-1)-uplet, le premier module de calcul 108 détermine une n-ième coordonnée $X_i^n$ en se référant à l'équation de l'hyperplan H, telle que :

$$X_i^n = a_{n-1}X_i^{n-1} + ... a_2X_i^2 + a_1X_i^1 + a_0$$

Lorsque l'utilisateur 300 a commandé pour la n-ième fois la réalisation d'une opération au cours de la même session, le deuxième module de calcul 110 déduit l'équation de l'hyperplan H à partir des n points $P_1$, $P_2$,...$P_n$ calculés par le premier module de calcul 108. A cet effet, il résout le système d'équations suivant :

$$\begin{cases} X_1^n = a_{n-1}X_1^{n-1} + ... a_2X_1^2 + a_1X_1^1 + a_0 \\ X_2^n = a_{n-1}X_2^{n-1} + ... a_2X_2^2 + a_1X_2^1 + a_0 \\ ... \\ X_n^n = a_{n-1}X_n^{n-1} + ... a_2X_n^2 + a_1X_n^1 + a_0 \end{cases}$$

Connaissant l'équation de l'hyperplan H (c'est à dire les coefficients $a_{n-1}$, ..., $a_2$, $a_1$, $a_0$), il est possible, en se reportant à la base de données 104 d'en déduire la clé de session associée à cet hyperplan H et par conséquent de remonter à l'identité de l'utilisateur frauduleux. Cette clé permet d'identifier l'utilisateur frauduleux qui a obtenu la réalisation de n opérations alors même qu'il était autorisé qu'à n'en réaliser que n-1.

La figure 3 représente la détermination d'un plan H (dimension 2) dans un espace de dimension n=3 à partir de 3 points $P_1$, $P_2$ et $P_3$ calculés par le premier module de calcul 108.

Selon un deuxième mode de mise en oeuvre du système de contrôle des fraudes, lorsqu'un utilisateur 300 se connecte au serveur 200 du fournisseur de services via un réseau de communication 400 et ouvre une session, une clé de session temporaire est automatiquement attribuée à l'utilisateur 300 par le serveur 200.

Le premier module de calcul 108 génère un point P (dimension 0) dans un espace de dimension 2. Le point étant défini par des coordonnées du type (X, Y). La clé de session ainsi que les coordonnées du point P associées sont enregistrées dans la base de données.

Lorsque l'utilisateur commande la réalisation de l'opération, le premier module de calcul détermine un équation $Y=a_1X+b_1$ d'une droite $D_1$ passant par le point P (X, Y). A cet effet, le module de pilotage commande le générateur pseudo-aléatoire pour que celui-ci génère un premier coefficient $a_1$ correspondant à la pente de la droite $D_1$. A partir de ce coefficient $a_1$, le premier module de calcul détermine un deuxième coefficient $b_1$ correspondant à l'ordonnée à l'origine de la droite $D_1$ à partir des coordonnées (X, Y) tel que $Y=a_1X+b_1$. On a :

$$b_1 = Y - a_1 \cdot X$$

Cette première équation de droite $Y=a_1X+b_1$ ne permet pas de déterminer les coordonnées du point P (X, Y) et de remonter à l'identité de l'utilisateur.

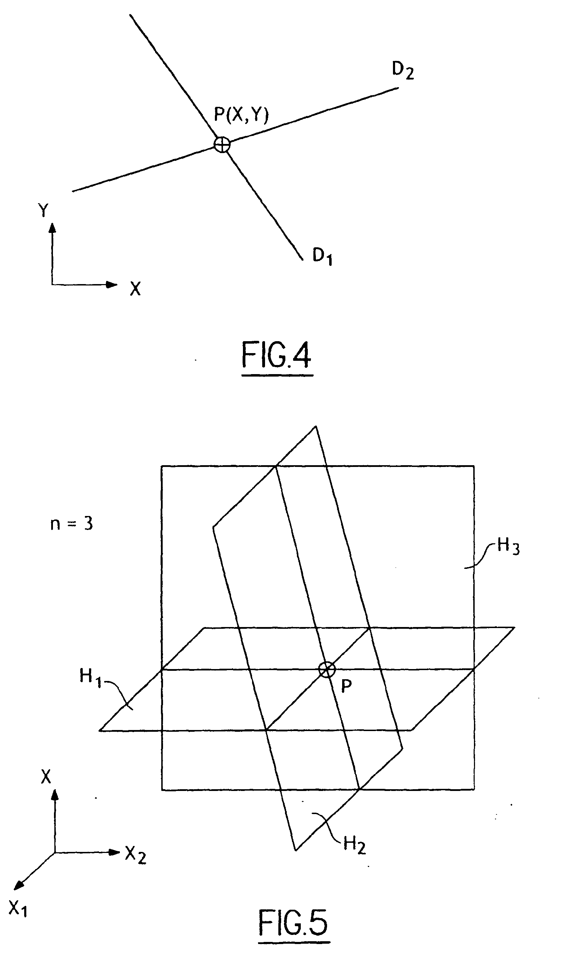

Ainsi qu'illustré sur la figure 4, si l'utilisateur commande de manière illicite la réalisation de la même opération, le premier module détermine une équation $Y=a_2X+b_2$ d'une deuxième droite $D_2$ passant pas le point (X, Y). A cet effet, le module de pilotage commande le générateur pseudo-aléatoire pour que celui-ci génère un premier coefficient $a_2$ différent de $a_1$. A partir de ce coefficient $a_2$, le premier module de calcul détermine un deuxième coefficient $b_2$ à partir des coordonnées du point (X, Y) tel que :

$$b_2 = Y - a_2 \cdot X$$

Dans cette mise en oeuvre de l'invention, l'espace dans lequel sont créés les points est un espace de dimension 2. Cette mise en oeuvre peut être généralisée à une application dans un espace de dimension n.

Lorsque l'utilisateur commande la réalisation d'une opération particulière (par exemple téléchargement d'un fichier ou d'un programme) dans le cadre de la session qu'il a ouverte, le premier module de calcul 108 génère un point P (dimension 0) dans un espace de dimension n. La clé de session ainsi que le point P associé à cette clé sont enregistrés dans la base de données 104. Ainsi, l'utilisateur et la session sont associés à un point P défini par le n-uplet de coordonnées $(X_1, X_2, ...X_n)$.

A chaque fois que l'utilisateur commande la réalisation d'une i-ème opération au cours de la même session, le premier module de calcul 108 détermine un hyperplan $H_i$ contenant le point P $(X_1, X_2, ...X_n)$, l'hyperplan $H_i$ étant défini par une équation du type $X^n = a_{n-1}^i X^{n-1} + ...a_2^i X^2 + a_1^i X^1 + a_0^i$, dans laquelle au moins (n-2) coefficients parmi les coefficients $a_{n-1}^i,...a_2^i, a_1^i, a_0^i$ sont nuls. A cet effet, le module de pilotage commande le générateur pseudo-aléatoire 106 pour que celui-ci génère un (n-1)-uplet de coefficients $(a_1^i, a_2^i,...,a_{n-1}^i)$. A partir de ce (n-1)-uplet, le premier module de calcul 108 détermine un n-ième coefficient $a_0^i$ à partir des coordonnées du point P $(X_o, X_1, X_2, ...X_n)$, tel que :

$$X_n = a_{n-1}^i X_{n-1} + ...a_2^i X_2 + a_1^i X_1 + a_0^i$$

L'anonymat de l'utilisateur 300 est maintenu tant que celui-ci réalise au plus (n-1) opérations car le système génère (n-1) équations à n inconnues, les n inconnues étant les coordonnées ($X_1$, $X_2$, ...$X_n$) du point P.

Lorsque l'utilisateur 300 réalise n opérations au cours de la même session, le deuxième module de calcul 110 déduit les coordonnées du point P ($X_1$, $X_2$, ...$X_n$) comme étant l'intersection des n hyperplans $H_1$, $H_2$...$H_n$ calculés par le premier module de calcul 108. A cet effet, le deuxième module de calcul 110 résout un système de n équations à n inconnues :

$$\begin{cases} X_n = a_{n-1}^1 X_{n-1} + ... a_2^1 X_2 + a_1^1 X_1 + a_0^1 \\ X_n = a_{n-1}^2 X_{n-1} + ... a_2^2 X_2 + a_1^2 X_1 + a_0^2 \\ ... \\ X_n = a_{n-1}^n X_{n-1} + ... a_2^n X_2 + a_1^n X_1 + a_0^n \end{cases}$$

Connaissant les coordonnées du point P ($X_1$, $X_2$, ...$X_n$), il est possible, en se reportant à la base de données 104 d'en déduire la clé de session associée à ce point P et par conséquent de remonter à l'identité de l'utilisateur frauduleux.

La figure 5 représente la détermination du point P dans un espace de dimension n=3 à partir de 3 plans $H_1$, $H_2$ et $H_3$ (dimension 2) calculés par le premier module de calcul 108.

## Revendications

1. Procédé de contrôle automatique des fraudes dans un système de transactions électroniques, **caractérisé en ce qu'**il comprend les étapes consistant à :

   - lorsqu'un utilisateur initie une session dans le système de transaction électronique, générer un élément et enregistrer dans une base de données l'élément en association avec des informations identifiant l'utilisateur,
   - à chaque fois qu'au cours de la session l'utilisateur commande la réalisation d'une opération, déterminer une équation linéaire à laquelle satisfait l'élément enregistré dans la base de données,
   - lorsqu'un nombre suffisant donné d'opérations a été effectué, résoudre un système d'équations linéaires indépendantes constitué des équations linéaires ainsi déterminées pour en déduire l'élément,
   - en se reportant à la base de données, déduire à partir de l'élément obtenu, les informations correspondantes identifiant l'utilisateur.

2. Procédé selon l'une la revendication 1, **caractérisé en ce que** l'élément est constitué d'une série de coefficients numériques.

3. Procédé selon la revendication 2, **caractérisé en ce que** la série de coefficients définit une équation d'hyperplan (H) de dimension (n-1) dans un espace (E) de dimension n et **en ce que**, à chaque fois que l'utilisateur commande la réalisation d'une opération, l'étape de détermination d'une équation consiste à déterminer les coordonnées

   $(X_i^1, \dot{X}_i^2, ... \ddot{X}_i^n)$ d'un point ($P_i$) appartenant à l'hyperplan (H).

4. Procédé selon la revendication 3, **caractérisé en ce que** la série de coefficients définit une équation de droite (D) dans un espace (E) à 2 dimensions et **en ce que**, à chaque fois que l'utilisateur commande la réalisation d'une opération, l'étape de détermination d'une équation consiste à déterminer les coordonnées ($X_i$, $Y_i$) appartenant à cette droite (D).

5. Procédé selon la revendication 2, **caractérisé en ce que** la série de coefficients définit les coordonnées ($X_1$, $X_2$, ...$X_n$) d'un point (P) dans un espace (E) de dimension n, et **en ce que**, à chaque fois que l'utilisateur commande la réalisation d'une opération, l'étape de détermination d'une équation consiste à déterminer l'équation d'un hyperplan ($H_i$) contenant le point P.

**6.** Procédé selon la revendication 5, **caractérisé en ce que** la série de coefficients définit les coordonnées (X Y) d'un point (P) dans un espace (E) à 2 dimensions et **en ce que**, à chaque fois que l'utilisateur commande la réalisation d'une opération, l'étape de détermination d'une équation consiste à déterminer l'équation d'une droite ($D_j$) passant par le point P.

**7.** Système de contrôle automatique des fraudes dans un système de transactions électroniques, **caractérisé en ce qu'**il comprend des premiers moyens de calcul (108) pour générer un élément lorsqu'un utilisateur (300) initie une session dans le système de transaction électronique (200), une base de données (104) dans laquelle est enregistré l'élément en association avec des informations identifiant l'utilisateur, les premiers moyens de calcul (108) étant aptes à déterminer une équation linéaire à laquelle satisfait l'élément enregistré dans la base de données (104) à chaque fois qu'au cours de la session l'utilisateur (300) commande la réalisation d'une opération, et des seconds moyens de calcul (110) aptes à résoudre un système d'équations linéaires indépendantes constitué des équations linéaires ainsi déterminées pour en déduire l'élément lorsqu'un nombre suffisant donné (n) d'opérations a été effectué, de sorte qu'en se reportant à la base de données (104), il soit possible de déduire à partir de l'élément obtenu, les informations correspondantes identifiant l'utilisateur (300).

**8.** Programme d'ordinateur comprenant des instructions de code de programme pour l'exécution des étapes du procédé selon l'une quelconque des revendications 1 à 6 lorsque ledit programme est exécuté sur un ordinateur.

**Claims**

**1.** Method of automatically checking for fraud in an electronic transaction system, **characterized in that** it comprises steps consisting in:

- when a user initiates a session in the electronic transaction system, generating an element and storing the element in a database together with information identifying the user,
- each time during the session the user orders an operation to be carried out, determining a linear equation that the element stored in the database complies with,
- when a given sufficient number of operations has been performed, solving a system of independent linear equations made up of the duly determined linear equations to deduce the element therefrom,
- by referring to the database, using the element obtained to deduce the corresponding information identifying the user.

**2.** Method according to Claim 1, **characterized in that** the element is made up of a series of numerical coefficients.

**3.** Method according to Claim 2, **characterized in that** the series of coefficients defines a hyperplan equation (H) of dimension (n-1) in an n-dimensional space (E), and **in that**, each time the user orders an operation to be carried out, the step for determining an equation consists in determining the coordinates $( X_i^1, X_i^2, \ldots X_i^n )$ of a point ($P_i$) belonging to the hyperplan (H).

**4.** Method according to Claim 3, **characterized in that** the series of coefficients defines a straight line equation (D) in a two-dimensional space (E), and **in that**, each time the user orders an operation to be carried out, the step for determining an equation consists in determining the coordinates ($X_i$, $Y_i$) belonging to that straight line (D).

**5.** Method according to Claim 2, **characterized in that** the series of coefficients defines the coordinates ($X_1$, $X_2$, ...$X_n$) of a point (P) in an n-dimensional space (E), and **in that**, each time the user orders an operation to be carried out, the step for determining an equation consists in determining the equation of a hyperplan ($H_i$) containing the point P.

**6.** Method according to Claim 5, **characterized in that** the series of coefficients defines the coordinates (X Y) of a point (P) in a two-dimensional space (E), and **in that**, each time the user orders an operation to be carried out, the step for determining an equation consists in determining the equation of a straight line ($D_j$) passing through the point P.

**7.** System for automatically checking for fraud in an electronic transaction system, **characterized in that** it comprises first computation means (108) for generating an element when a user (300) initiates a session in the electronic transaction system (200), a database (104) in which the element is stored together with information identifying the user, the first computation means (108) being capable of determining a linear equation that the element stored in the database (104) complies with each time that, during the session, the user (300) orders an operation to be carried out, and second computation means (110) capable of solving a system of independent linear equations made up of the duly determined linear equations to deduce the element therefrom when a given sufficient number (n) of operations has been performed, such that, by referring to the database (104), it is possible to use the element obtained to deduce the corresponding information identifying the user (300).

8. Computer program comprising program code instructions for executing the steps of the method according to any one of Claims 1 to 6 when said program is run on a computer.

**Patentansprüche**

1. Verfahren zur automatischen Kontrolle von betrügerischen Handlungen in einem System für elektronische Transaktionen, **dadurch gekennzeichnet, dass** es die Schritte umfasst, die daraus bestehen:

   - wenn ein Benutzer eine Sitzung in dem elektronischen Transaktionssystem initiiert, ein Element zu erzeugen und das Element in Verbindung mit Informationen, die den Benutzer identifizieren, in einer Datenbank abzuspeichern,
   - jedes Mal, wenn im Verlauf der Sitzung der Benutzer die Ausführung eines Vorgangs anordnet, eine lineare Gleichung zu ermitteln, welcher das in der Datenbank abgespeicherte Element genügt,
   - wenn eine gegebene ausreichende Anzahl von Vorgängen ausgeführt worden ist, ein System von unabhängigen linearen Gleichungen aufzulösen, das aus den so ermittelten linearen Gleichungen besteht, um das Element davon abzuleiten,
   - durch Nachschlagen in der Datenbank, ausgehend von dem erhaltenen Element, die entsprechenden Informationen abzuleiten, die den Benutzer identifizieren.

2. Verfahren nach Anspruch 1, **dadurch gekennzeichnet, dass** das Element aus einer Serie von Zahlenkoeffizienten besteht.

3. Verfahren nach Anspruch 2, **dadurch gekennzeichnet, dass** die Serie von Koeffizienten eine Gleichung einer Hyperebene (H) einer Dimension (n-1) in einem Raum (E) einer Dimension n definiert, und **dadurch, dass** jedes Mal, wenn der Benutzer die Ausführung eines Vorgangs anordnet, der Schritt der Ermittlung einer Gleichung daraus besteht, die Koordinaten ($X^1_i$, $X^2_i$, ... $X^n_i$) eines Punkts ($P_i$) zu ermitteln, welcher zu der Hyperebene (H) gehört.

4. Verfahren nach Anspruch 3, **dadurch gekennzeichnet, dass** die Serie von Koeffizienten eine Gleichung einer Geraden (D) in einem zweidimensionalen Raum (E) definiert, und **dadurch, dass** jedes Mal, wenn der Benutzer die Ausführung eines Vorgangs anordnet, der Schritt der Ermittlung einer Gleichung daraus besteht, die Koordinaten ($X_i$, $Y_i$) zu ermitteln, welche zu dieser Geraden (D) gehören.

5. Verfahren nach Anspruch 2, **dadurch gekennzeichnet, dass** die Serie von Koeffizienten die Koordinaten ($X_1$, $X_2$, ... $X_n$) eines Punkts (P) in einem Raum (E) einer Dimension n definiert, und **dadurch, dass** jedes Mal, wenn der Benutzer die Ausführung eines Vorgangs anordnet, der Schritt der Ermittlung einer Gleichung daraus besteht, die Gleichung einer Hyperebene ($H_i$) zu ermitteln, die den Punkt P enthält.

6. Verfahren nach Anspruch 5, **dadurch gekennzeichnet, dass** die Serie von Koeffizienten die Koordinaten (X Y) eines Punkts (P) in einem zweidimensionalen Raum (E) definiert, und **dadurch, dass** jedes Mal, wenn der Benutzer die Ausführung eines Vorgangs anordnet, der Schritt Ermittlung einer Gleichung daraus besteht, die Gleichung einer Geraden ($D_i$) zu ermitteln, die durch den Punkt P verläuft.

7. System zur automatischen Kontrolle von betrügerischen Handlungen in einem System für elektronische Transaktionen, **dadurch gekennzeichnet, dass** es erste Berechnungsmittel (108) umfasst, um ein Element zu erzeugen, wenn ein Benutzer (300) eine Sitzung in dem elektronischen Transaktionssystem (200) initiiert, eine Datenbank (104), in welcher das Element in Verbindung mit Informationen abgespeichert ist, welche den Benutzer identifizieren, wobei die ersten Berechnungsmittel (108) in der Lage sind, eine lineare Gleichung zu ermitteln, welcher das Element, das in der Datenbank (104) abgespeichert ist, jedes Mal im Verlauf der Sitzung genügt, wenn der Benutzer (300) die Ausführung eines Vorgangs anordnet, und zweite Berechnungsmittel (110), die in der Lage sind, ein System von unabhängigen linearen Gleichungen aufzulösen, das aus den so ermittelten linearen Gleichungen besteht, um das Element davon abzuleiten, wenn eine gegebene ausreichende Anzahl (n) von Vorgängen ausgeführt worden ist, damit es durch Nachschlagen in der Datenbank (104) möglich ist, ausgehend von dem erhaltenen Element die entsprechenden Informationen abzuleiten, die den Benutzer (300) identifizieren.

8. Computerprogramm, die Befehle für einen Code des Programms zur Ausführung der Schritte des Verfahrens nach irgendeinem der Ansprüche 1 bis 6 umfassend, wenn das Programm auf einem Computer ausgeführt wird.

FIG.1

$P_2(X_2, Y_2)$

Y

X

$P_1(X_1, Y_1)$

D

## FIG.2

H

n = 3

$P_3(X_3^1, X_3^2, X_3^3)$

$P_2(X_2^1, X_2^2, X_2^3)$

$P_1(X_1^1, X_1^2, X_1^3)$

$X^3$

$X^2$

$X^1$

## FIG.3

## FIG.4

## FIG.5

**EP 1 692 809 B1**

**RÉFÉRENCES CITÉES DANS LA DESCRIPTION**

**Documents brevets cités dans la description**

- US 6636613 B1